# FASCICULE DE BREVET EUROPEEN

(11) **EP 0 894 644 B1**
(45) Date de publication et mention de la délivrance du brevet: **06.02.2002**
(21) Numéro de dépôt: 97410087.7
(22) Date de dépôt: 31.07.1997
(51) Int. Cl.: B44C 1/10, D21H 27/20, C09J 7/04

(54) **Feuille adhésive par application de pression**
Druckempfindliche Klebefolie
Pressure-activated adhesive sheet

(43) Date de publication de la demande: 03.02.1999
(73) Titulaire: Blanc-Brude, Dominique, 38000 Grenoble (FR)
(72) Inventeur: Blanc-Brude, Dominique, 38000 Grenoble (FR)
(74) Mandataire: de Beaumont, Michel

(56) Documents cités:
- EP-A- 0 479 223
- EP-A- 0 609 603
- WO-A-95/17312
- DE-A- 4 411 562
- DE-B- 1 245 523

## Description

La présente invention concerne une feuille adhésive par application de pression, c'est-à-dire une feuille qui, quand elle est présentée sur une surface à laquelle on veut la coller, n'est effectivement collée qu'après application d'une pression. Une telle structure présente l'avantage que l'on peut réaliser un positionnement précis avant fixation définitive.

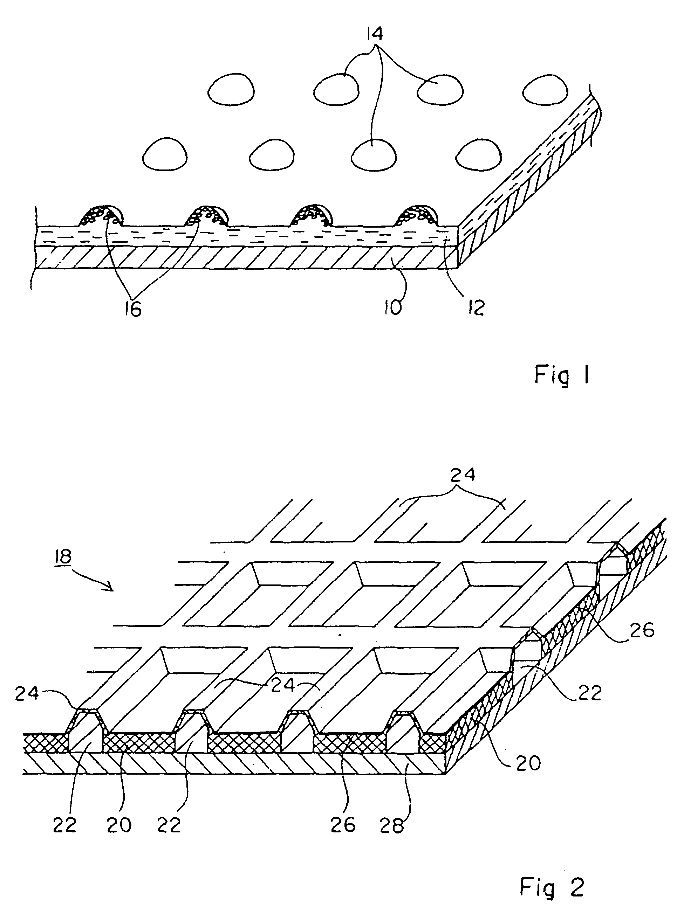

La figure 1 représente en perspective et partiellement en coupe une feuille adhésive par application de pression connue, telle que décrite dans la demande de brevet européen EP-A-0 429 269. Cette feuille comporte un substrat 10 revêtu uniformément d'une couche d'adhésif 12. Des dômes 14 sont régulièrement répartis sur la couche d'adhésif 12. Les dômes 14 sont constitués de microbilles 16 déposées sur la surface de la couche d'adhésif 12. Ainsi, les dômes 14 ne sont pas adhérents.

Les dômes 14 servent à éviter que la couche d'adhésif 12 n'entre en contact avec la surface sur laquelle on pose la feuille adhésive. La feuille peut donc être déplacée en contact avec la surface jusqu'à la position souhaitée. On applique alors une pression sur la feuille, qui a pour effet d'enfoncer les dômes 14 dans la couche d'adhésif et d'amener la couche d'adhésif en contact avec la surface.

Un inconvénient de cette feuille adhésive est que la couche d'adhésif 12 doit être relativement épaisse pour pouvoir loger par enfoncement des dômes 14 de hauteur suffisante, ce qui la rend plus difficile à fabriquer.

En outre, toute feuille adhésive, en particulier celle du type de la figure 1, présente l'inconvénient d'emprisonner des bulles d'air au moment du collage, ce qui nuit à l'esthétique dans le cas où la feuille a une fonction décorative. Cet inconvénient est d'autant plus difficile à éviter que la surface de la feuille est importante, ce qui rend peu pratique l'utilisation de ces feuilles adhésives pour des lés de papier peint, par exemple.

Un objet de la présente invention est de prévoir une feuille adhésive par application de pression qui, quelle que soit sa surface, ne soit pas susceptible d'emprisonner des bulles d'air au moment du collage.

Cet objet est atteint, selon l'invention, grâce à une feuille adhésive par application de pression comprenant un substrat revêtu d'un adhésif sur une face avant, et des éléments non adhérents en saillie par rapport à la face avant et susceptibles de s'écraser par application d'une pression. Le substrat comprend un maillage de canaux débouchant sur au moins un bord de la feuille, et lesdits éléments non adhérents sont des bandes formant toits surmontant les canaux.

Selon un mode de réalisation de la présente invention, un revêtement est rapporté sur la face arrière de la feuille.

Selon un mode de réalisation de la présente invention, l'adhésif est également disposé sur les toits, où il est revêtu d'un produit neutralisant.

Selon un mode de réalisation de la présente invention, les toits ont un profil trapézoïdal.

Selon un mode de réalisation de la présente invention, les canaux comportent une forme en contre-dépouille du côté de la face arrière.

Selon un mode de réalisation de la présente invention, les toits font partie intégrante du substrat.

Selon un mode de réalisation de la présente invention, le substrat est en une mousse de matière plastique.

Selon un mode de réalisation de la présente invention, le revêtement est un papier peint.

Selon un mode de réalisation de la présente invention, les canaux s'étendent sur toute l'épaisseur du substrat.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente une feuille adhésive par application de pression connue ;
la figure 2 représente en perspective et partiellement en coupe un mode de réalisation de feuille adhésive par application de pression selon la présente invention ; et
les figures 3A et 3B représentent une vue en coupe d'une feuille selon l'invention, avant et après application de pression.

Dans la figure 2, une feuille 18 adhésive par application de pression selon l'invention comprend un substrat rainuré 20. Les rainures peuvent s'étendre sur toute l'épaisseur du substrat et forment un maillage de canaux 22 qui débouchent sur les bords de la feuille. Comme cela est représenté à titre d'exemple, le maillage est rectangulaire. Chaque canal 22 est surmonté d'une bande formant un toit 24 en saillie par rapport à la face avant de la feuille 18. Ces toits 24 sont notablement plus fins que le substrat 20 et, dans l'exemple représenté, font partie intégrante du substrat 20.

L'épaisseur des toits et l'épaisseur du substrat 20 sont choisies de manière que les toits 24 puissent, à la suite d'un écrasement, être contenus dans les canaux 22. Le profil des toits 24 est choisi pour favoriser l'écrasement dans les canaux 22. Pour cela, les toits ont un profil trapézoïdal, par exemple.

Le substrat 20 est revêtu, sur sa face avant, dans les zones comprises entre les toits 24, d'une couche d'adhésif 26, tel que de l'adhésif acrylique permanent.

Dans un exemple d'application, un revêtement 28 est fixé à la face arrière de la feuille 18. Plus particulièrement, ce revêtement 28 pourra être un décor de papier peint. L'ensemble de la feuille adhésive 18 et du revêtement 28 constitue alors un lé autocollant de papier peint. Le papier peint 28 peut être composé de deux feuilles dont la feuille externe est arrachable. De préférence, toujours dans le cadre du papier peint, les canaux 22 sont obliques par rapport aux bords des lés, de sorte qu'un bord de lé ne soit pas susceptible de coïncider avec l'axe d'un canal 22.

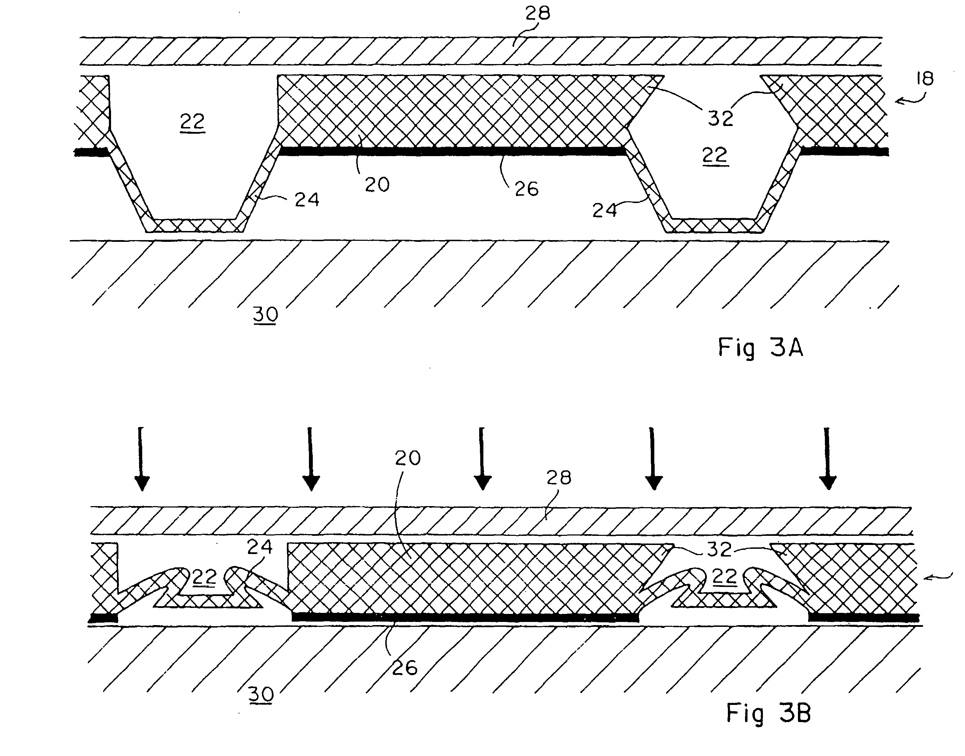

Les figures 3A et 3B sont destinées à illustrer une utilisation de la feuille adhésive selon l'invention.

A la figure 3A, la feuille 18 est posée sur une surface 30. Les sommets des toits 24 entrent en contact avec la surface 30 et maintiennent l'adhésif 26 à l'écart de cette surface. Les toits 24 étant dépourvus d'adhésif, la feuille peut être déplacée tout en restant en contact avec la surface, jusqu'à obtention du positionnement souhaité.

La figure 3B illustre la feuille 18 après application d'une pression selon les flèches représentées. Cette pression provoque l'écrasement des toits 24 qui se logent entièrement dans les canaux 22, comme cela est représenté. Il en résulte que la couche d'adhésif 26 est appliquée sur la surface 30, ce qui provoque le collage de la feuille. L'air qui se trouvait entre la surface 30 et chaque parcelle d'adhésif 26 est évacué jusqu'au bord de la feuille le long des plis formés entre le toit écrasé 24 et la surface 30. De la même manière, l'air qui se trouvait dans les canaux 22 est évacué le long de ces canaux vers le bord de la feuille. Chaque parcelle de substrat 20, délimitée par quatre toits 24, a un rapport épaisseur/surface si important qu'elle peut être considérée comme rigide, c'est-à-dire qu'elle ne risque pas d'emprisonner des bulles d'air.

L'évacuation de l'air peut être facilitée en prévoyant des perforations (non représentées) dans les toits 24.

Le substrat 20 est par exemple une matière thermoplastique. Les canaux 22 et les toits 24 peuvent alors être formés avec le substrat 20 par moulage ou thermoformage, selon des procédés classiques. Dans le cadre d'une application à du papier peint, le substrat 20 doit être léger et à découpe facile. De préférence, le substrat 20 est réalisé à partir d'une pâte cellulosique moulable, une telle pâte étant peu coûteuse et facile à travailler. Le substrat 20 pourrait également être en mousse, telle que de la mousse de polyuréthanne ou autre, ou encore en Vinyl ou polyéthylène.

Dans un mode de réalisation de l'invention, l'adhésif 26 est appliqué sur le substrat 20 entre les toits 24, par exemple à travers un pochoir qui cache les toits. Une autre solution consiste à appliquer l'adhésif 26 sur l'ensemble du substrat, y compris les toits 24, et ensuite à neutraliser l'adhésif sur les toits 24. Cette neutralisation est effectuée, par exemple, en appliquant sur les toits 24 une peinture de type acrylique, une encre, un vernis, ou une poudre.

Un avantage de la présente invention est qu'il est inutile de prévoir une feuille protectrice pour protéger l'adhésif 26. Il suffit d'enrouler directement la feuille 18 sur elle-même. Les toits 24 empêchent le collage de l'adhésif 26 de la face avant d'un tour de l'enroulement sur la face arrière du tour adjacent, pourvu que l'on prenne soin de ne pas appliquer une pression qui provoquerait l'écrasement des toits 24.

Dans certains cas, la feuille 18 pourrait être fabriquée et stockée sous forme de rouleaux, sans qu'un revêtement ou un papier peint 28 n'ait été préalablement fixé sur la feuille. Dans ce cas, il est possible qu'un toit 24 d'un tour coïncide avec un canal 22 d'un tour adjacent, ce qui pourrait provoquer un collage au niveau de ces deux tours entre des portions des faces avant et arrière de la feuille. Afin d'éviter cela, comme cela est représenté à droite dans les figures 3A et 3B, les canaux 22 peuvent comporter, du côté de la face arrière, des formes en contre-dépouille 32 qui ferment partiellement les canaux 22. De telles formes en contre-dépouille peuvent être réalisées par thermoformage ou moulage de la matière plastique souple constituant le substrat 20.

Dans le cadre de l'application de la présente invention au papier peint, un exemple de dimensions peut être relevé sur les figures 3A et 3B en les considérant à l'échelle 20.

L'homme du métier saura choisir les différents matériaux des éléments constituant la feuille adhésive selon l'invention en fonction de l'application qu'il envisage.

De nombreuses variantes et modifications de la présente invention apparaîtront à l'homme du métier. Par exemple, les toits 24 peuvent être constitués par des bandes rapportées sur le substrat 20, ou bien par une feuille gaufrée collée sur la face avant du substrat. La cohérence du substrat est alors assurée par le fait que les canaux 22 ne s'étendent pas jusqu'à la face arrière. Les bandes pourront être collées sur l'adhésif préalablement appliqué sur la face avant du substrat. Des profils autres que trapézoïdal peuvent être utilisés pour les toits.

## Revendications

1. Feuille adhésive par application de pression comprenant un substrat (20) revêtu d'un adhésif (26) sur une face avant, et des éléments non adhérents (24) en saillie par rapport à la face avant et susceptibles de s'écraser par application d'une pression, **caractérisée en ce que** le substrat comprend un maillage de canaux (22) débouchant sur au moins un bord de la feuille, et **en ce que** lesdits éléments non adhérents sont des bandes formant toits (24) surmontant les canaux.

2. Feuille adhésive selon la revendication 1, **caractérisée en ce qu'**un revêtement (28) est rapporté sur sa face arrière.

3. Feuille selon la revendication 1, **caractérisée en ce que** l'adhésif est également disposé sur les toits (24), où il est revêtu d'un produit neutralisant.

4. Feuille adhésive selon la revendication 1, **caractérisée en ce que** les toits (24) ont un profil trapézoïdal.

5. Feuille adhésive selon la revendication 1, **caractérisée en ce que** les canaux (22) comportent une forme en contre-dépouille (32) du côté de la face arrière.

6. Feuille adhésive selon la revendication 1, **caractérisée en ce que** les toits (24) font partie intégrante du substrat (20).

7. Feuille adhésive selon la revendication 2, **caractérisée en ce que** le substrat (20) est en une mousse de matière plastique.

8. Feuille adhésive selon la revendication 2, **caractérisée en ce que** le substrat (20) est réalisé à partir d'une pâte cellulosique moulable.

9. Feuille adhésive selon la revendication 2, 7 ou 8, **caractérisée en ce que** le revêtement (28) est un papier peint.

10. Feuille adhésive selon la revendication 1, **caractérisée en ce que** les canaux (22) s'étendent sur toute l'épaisseur du substrat (20).

## Patentansprüche

1. Mittels Druckaufbringung betätigbare Klebefolie (Druckempfindliche Klebefolie), welche ein auf seiner Vorderseite mit einem Kleber (26) überzogenes Substrat (20) sowie über die Vorderseite überstehende nicht-haftende bzw. nichtklebende Elemente (24) aufweist, welche durch Druckausübung flachgedrückt werden können, **dadurch gekennzeichnet daß** das Substrat ein Netz-bzw. Maschenwerk von Kanälen (22) aufweist, welche wenigstens am Rande der Folie offen münden, und daß die genannten nicht-haftenden bzw. nicht-klebenden Elemente Bänder sind, welche die Kanäle überdeckende Dächer (24) bilden.

2. Klebefolie nach Anspruch 1, **dadurch gekennzeichnet, daß** sie auf der Rückseite mit einem Überzug (28) versehen ist.

3. Klebefolie nach Anspruch 1, **dadurch gekennzeichnet, daß** der Kleber auch auf den Dächern (24) aufgebracht ist, wo er mit einem neutralisierenden Mittel überzogen ist.

4. Klebefolie nach Anspruch 1, **dadurch gekennzeichnet, daß** die Dächer ein trapezförmiges Profil besitzen.

5. Klebefolie nach Anspruch 1, **dadurch gekennzeichnet, daß** die Kanäle (22) an ihrer Rückseite eine hinterschnittene Form (32) besitzen.

6. Klebefolie nach Anspruch 1, **dadurch gekennzeichnet, daß** die Dächer (24) einen integrierenden Teil des Substrats (20) bilden.

7. Klebefolie nach Anspruch 2, **dadurch gekennzeichnet, daß** das Substrat (20) ein Kunststoffschaum ist.

8. Klebefolie nach Anspruch 2, **dadurch gekennzeichnet, daß** das Substrat (20) auf der Grundlage ausgehend von einer formfähigen Zellulose-Paste hergestellt ist.

9. Klebefolie nach Anspruch 2, 7 oder 8, **dadurch gekennzeichnet, daß** der Überzug (28) ein Tapetenpapier ist.

10. Klebefolie nach Anspruch 1, **dadurch gekennzeichnet, daß** die Kanäle (22) sich über die gesamte Substratdicke erstrecken.

## Claims

1. A sheet adhesive by pressure application including a substrate (20) covered with an adhesive (26) on a front surface, and non-adherent elements (24) protruding with respect to the front surface and likely to yield by application of a pressure, **characterized in that** the substrate includes a meshing of channels (22) opening at least at one edge of the sheet, and **in that** the non-adherent elements are bands forming roofs (24) above the channels.

2. The adhesive sheet of claim 1, **characterized in that** it has a coating (28) on its rear surface.

3. The sheet of claim 1, **characterized in that** the adhesive is also present on the roofs (24), where it is covered with a neutralizing product.

4. The adhesive sheet of claim 1, **characterized in that** the roofs (24) have a trapezoidal profile.

5. The adhesive sheet of claim 1, **characterized in that** the channels (22) have an undercut shape (32) on the rear surface side.

6. The adhesive sheet of claim 1, **characterized in that** the roofs (24) are integral with the substrate (20).

7. The adhesive sheet of claim 2, **characterized in that** the substrate (20) is a plastic foam.

8. The adhesive sheet of claim 2, **characterized in that** the substrate (20) is made from a moldable cellulose paste.

9. The adhesive sheet of claim 2, 7, or 8, **characterized in that** the coating (28) is a wall paper.

10. The adhesive sheet of claim 1, **characterized in that** the channels (22) extend throughout the thickness of the substrate (20).
